Europäisches Patentamt

**European Patent Office**

Office européen des brevets

(19)

(11) Numéro de publication: **0 275 227 B1**

(12) **FASCICULE DE BREVET EUROPEEN**

(45) Date de publication du fascicule du brevet:
03.10.90

(51) Int. Cl.⁵: **F16K 31/122**, F15B 15/14

(21) Numéro de dépôt: **88420005.6**

(22) Date de dépôt: **06.01.88**

(54) **Vanne à commande pneumatique et bloc de distribution destiné à une telle vanne.**

(30) Priorité: **06.01.87 FR 8700956**

(43) Date de publication de la demande:
**20.07.88 Bulletin 88/29**

(45) Mention de la délivrance du brevet:
**03.10.90 Bulletin 90/40**

(84) Etats contractants désignés:
**AT BE CH DE ES FR GB GR IT LI LU NL SE**

(56) Documents cités:
**DE-A- 2 120 560**
**DE-B- 1 060 335**
**FR-A- 1 358 512**
**FR-A- 1 433 316**
**GB-A- 1 145 442**
**US-A- 3 288 036**
**US-A- 3 451 423**
**US-A- 3 485 141**
**US-A- 4 137 828**

(73) Titulaire: **LA LEDOISE SA, CH-2024 Saint-Aubin(CH)**

(72) Inventeur: **Beauvir, Jacques, Grand-Rue 34,
2035 Corcelles(FR)**

(74) Mandataire: **Maureau, Philippe et al, Cabinet Germain &
Maureau Le Britannia - Tour C 20, bld Eugène Déruelle
Boîte Postale 3011, F-69392 Lyon Cédex 03(FR)**

ACTORUM AG

## Description

La présente invention a pour objet une vanne à commande pneumatique du type constitué par un corps de vanne creux de forme cylindrique fixé sur une embase comprenant un passage de fluide de travail coopérant avec un obturateur à l'extrémité d'une tige de commande appartenant à un ensemble mobile à l'intérieur du corps de vanne sous l'effet d'un fluide de commande sous pression, la tige de commande étant munie d'au moins deux pistons mobiles qui, avec des cloisons fixes ou la paroi de fond du corps de vanne, délimitent deux ou plusieurs chambres annulaires de commande de volume variable dans lesquelles est admis le fluide de commande, des moyens de rappel élastiques étant prévus pour ramener l'ensemble mobile à sa position de repos.

Une telle vanne est destinée notamment à être implantée sur des équipements industriels utilisant des gaz spéciaux tels que des matériels pour la fabrication de fibres optiques et de semi-conducteurs.

Le brevet FR-1 358 512 enseigne déjà un tel type de vanne ; toutefois, celle-ci est mal adaptée aux applications technologiques concernées. En effet, elle comprend un corps de vanne constitué de plusieurs blocs formés eux-mêmes par plusieurs pièces et liés les uns aux autres par tout moyen approprié. La présence de joints aux jonctions des conduits d'amenée d'air de chacun des blocs ne favorise pas l'étanchéité du corps de vanne ; des fuites peuvent donc se produire et nuire au fonctionnement de la vanne. En outre, la sécurité du dispositif n'est pas garantie, car la séparation entre le fluide de commande et le fluide circulant est assurée de façon imparfaite par des joints encastrés ; or, le gaz circulant peut être parfois très dangereux et ne doit donc pas être mis en contact ave le fluide de commande.

Malgré sa structure multi-pistons, cette vanne pneumatique ne bénéficie pas d'un encombrement suffisamment réduit pour l'application concernée. La réduction des pièces est limitée par la constitution en plusieurs blocs qui implique la présence de zones d'assemblage sur ceux-ci.

Enfin, la fabrication complexe et longue de cette vanne pneumatique entraîne un coût de revient élevé.

Le but de la présente invention est de prévoir une vanne du type précité qui soit d'un encombrement réduit, notamment en ce qui concerne ses dimensions radiales, tout en étant adaptée à des hautes pressions de gaz de commande et en offrant une excellente étanchéité entre la zone de commande et la zone de travail de la vanne, ainsi qu'un bloc de distribution permettant le regroupement sous un espace réduit de plusieurs vannes.

Enfin, un autre but de la présente invention est de réduire, de façon notable, les coûts de fabrication d'une telle vanne en prévoyant des pièces interchangeables pouvant être utilisées aussi bien dans une vanne normalement ouverte que dans une vanne normalement fermée.

Ces buts sont atteints dans la vanne selon l'invention qui est du type précité, par le fait que le corps de vanne est monobloc et que les cloisons fixes sont conçues comme des pistons fixes traversés par la tige de commande et qui sont montés indépendants de prolongements axiaux des pistons mobiles et de la paroi du corps de vanne, l'un au moins des pistons fixes étant maintenu en position de repos par un anneau d'arrêt engagé par déformation élastique dans une rainure annulaire de la paroi du corps de vanne et par une butée appartenant au prolongement axial du piston mobile associé.

La structure monobloc de ce corps de vanne est fondamentale pour l'application spécifique de cette vanne pneumatique car elle garantit une robustesse et une étanchéité parfaites du fait de l'absence de joint. Elle offre, de plus, une importante précision de fonctionnement, ce qui permet d'obtenir des réponses rapides nécessaires pour un dosage précis des gaz spéciaux intervenant dans la fabrication de composants électroniques.

De plus, ce corps de vanne en une seule pièce est tout à fait adapté aux enceintes corrosives dans lesquelles il est susceptible d'être placé. En effet, un simple traitement de surface suffit pour protéger correctement la vanne de son milieu extérieur.

La combinaison de ce corps de vanne monobloc avec une structure multipistons en série est tout à fait originale et performante. Elle offre en même temps, les avantages inhérents à la structure monobloc et celui qui consiste à diminuer la surface de travail des pistons et donc l'encombrement de la vanne, tout en conservant pour celle-ci une force de commande du déplacement de l'obturateur identique, voir même supérieure, pour une même pression du fluide de commande que dans une vanne équipée d'un seul piston.

Cette disposition permet, en outre, d'accroître la sécurité, puisqu'en cas de défectuosité de l'un des étages, le ou les autres étages permettent de garantir le fonctionnement de la vanne.

La vanne ainsi obtenue est de fabrication simple et facile à mettre en oeuvre et n'est donc pas d'un coût de revient élevé.

Selon une forme de réalisation préférée, un soufflet étanche est fixé, de façon étanche, entre, d'une part, l'obturateur et, d'autre part, le corps de la vanne.

Ce soufflet permet d'obtenir une cavité étanche pour le passage des gaz d'utilisation et donc d'assurer une étanchéité parfaite entre le passage pour le gaz d'utilisation et la partie de commande de la vanne, ce qui est particulièrement important, lorsque ces gaz sont dangereux.

Selon un autre aspect de l'invention, le siège de l'obturateur de chaque vanne est réalisé directement dans un bloc de distribution commun et les conduits d'arrivée et de sortie du gaz d'utilisation sont constitués par des perçages obliques réalisés depuis une face latérale ou la face inférieure du bloc de distribution et débouchant directement dans chacun des sièges d'obturateur.

Cette disposition est particulièrement avantageuse, car elle permet d'éviter la formation de cavités mortes où il n'y a pas de circulation de gaz et dans lesquelles des dépôts de particules sont susceptibles de se former, et elle permet également d'optimiser le trajet des gaz d'utilisation, et de diminuer les volumes résiduels.

De tout façon, l'invention sera bien comprise et d'autres caractéristiques de celle-ci seront mises en évidence à l'aide de la description qui suit en référence au dessin schématique annexé illustrant à titre d'exemples non limitatifs plusieurs formes de réalisation d'une vanne et d'un bloc de distribution selon l'invention :

Figure 1 est une vue en coupe d'une vanne selon une première forme de réalisation ;

Figure 2 est une vue similaire à figure 1 d'une vanne selon une seconde forme de réalisation ;

Figure 3 est une vue en perspective d'un bloc de distribution,

Figure 4 est une vue en coupe du bloc de distribution de figure 3 monté entre deux caissons ;

Figure 5 est, à échelle agrandie, une vue en coupe du bloc de distribution de figure 3.

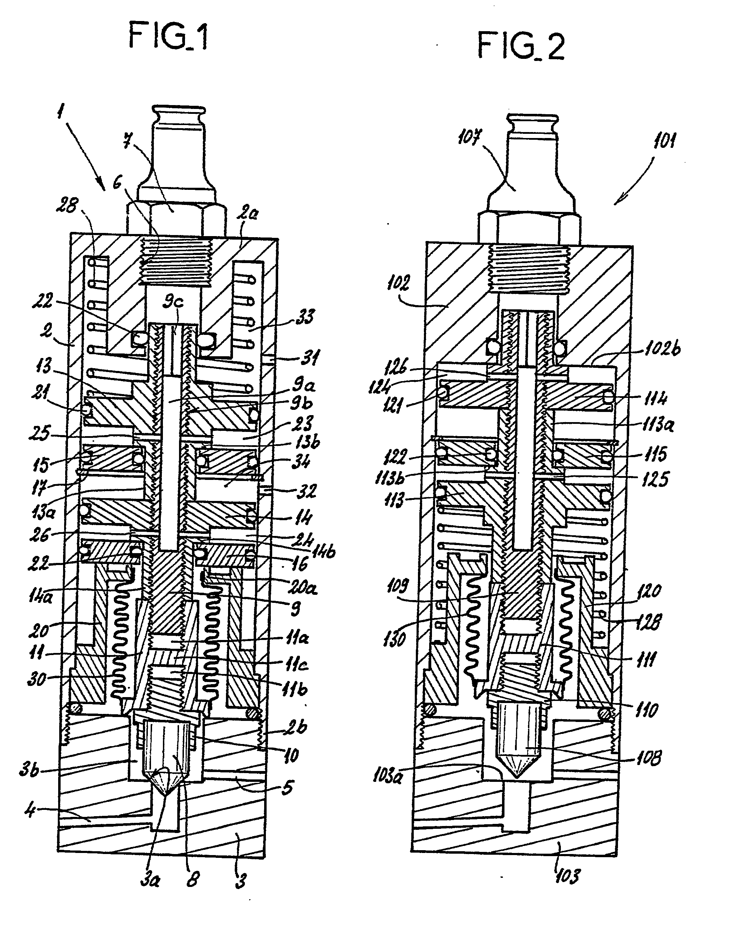

La figure 1 montre une vanne 1 selon l'invention de type normalement fermée. Cette vanne est constituée d'un corps de vanne 2 creux monobloc de forme cylindrique qui est fermé à l'une 2a de ses extrémités et qui, à son autre extrémité 2b, est ouvert et muni d'un filetage intérieur pour son raccordement par vissage sur une embase 3 contenant le siège 3a de l'obturateur et deux conduits 4,5 respectivement d'arrivée et de sortie du gaz de travail formant le passage du fluide de travail et débouchant chacun dans une cavité 3b de l'embase.

Le corps de vanne est, par ailleurs, muni à son extrémité 2a d'un trou taraudé 6 pour la mise en place d'un embout 7 fileté destiné à amener le gaz de commande, en l'occurrence de l'air comprimé.

A l'intérieur du corps de vanne 2 sont disposés l'obturateur proprement dit 8 de la vanne et sa tige de commande 9. La tige de commande 9 est munie sur presque toute sa longueur d'un trou central 9a et présente extérieurement sur toute sa longueur un filetage 9b.

L'obturateur 8 a, en l'occurrence, la forme d'un pointeau et est destiné à coopérer de façon connue en soi avec le siège 3a de l'embase de la vanne pour mettre en communication les deux conduits 4,5 ou, au contraire, interrompre cette communication.

L'oburateur 8 est monté sur un support d'obturateur 10 qui est lui-même fixé de façon amovible par vissage sur la tige 9 de commande de l'obturateur par l'intermédiaire d'une pièce cylindrique 11 ayant en section transversale sensiblement la forme d'un H.

Cette pièce 11 comporte deux cavités taraudées 11a et 11b coaxiales et séparées l'une de l'autre par une cloison 11c. Le support d'obturateur 10 est vissé dans la cavité 11b, tandis que la pièce 11 est elle-même fixée par vissage à l'extrémité de la tige de commande 9. Sur la tige de commande 9 sont également montés différents pistons à savoir un premier piston 13 dit mobile et un second piston 14 également mobile. Ces deux pistons 13 et 14 sont tous les deux vissés sur la tige de commande 9 et sont donc solidaires de celle-ci.

Ils sont dits mobiles, car ils se déplacent avec la tige de commande à l'intérieur du corps de vanne pour assurer la fermeture ou l'ouverture de celle-ci.

Deux cloisons fixes 15,16 sont également prévues pour délimiter des chambres annulaires de commande 23,24 avec le pistons mobiles associés 13,14. Ces cloisons 15,16 sont, et fait, conçues comme des pistons fixes traversés par la tige de commande 9. Chacun de ces pistons est monté libre par rapport à un prolongement axial respectivement 13a,14a d'un piston mobile associé respectivement 13,14 et par rapport à la paroi du corps de vanne 2. En position de repos de la vanne, c'est-à-dire lorsqu'un ressort 28 prévu entre le fond 2a du corps de vanne 2 et le premier piston mobile 13 sollicite l'ensemble tige de commande et piston vers le bas et applique donc l'obturateur 8 contre son siège de façon à assurer la fermeture de la vanne ; le piston 15 est maintenu fixe en position axiale par l'intermédiaire d'un butée 13b du prolongement axial 13a du piston mobile 13 et par un anneau d'arrêt 17.

L'anneau d'arrêt 17 est rétreint par déformation élastique et est engagé ainsi à l'intérieur du corps de vanne 2 avec l'ensemble mobile. En se détendant, il s'engage définitivement dans une rainure annulaire non référencée de la paroi du corps de vanne monobloc 2 , bloquant ainsi le déplacement axial du piston fixe 15.

Le piston 16 est, quant à lui, maintenu fixe par une butée 14b constituée par un épaulement du prolongement axial 14a du piston 14 et par une pièce cylindrique 20 disposée à lintérieur du corps de vanne et dont le rôle sera expliqué plus loin. En position active des pistons mobiles, la pression du fluide de commande bloque les pistons fixes 15,16 contre respectivement l'anneau d'arrêt 17 et la pièce 20.

L'étanchéité de chacun des pistons fixes 15,16 par rapport au corps de vanne 2 et aux pistons mobiles associés respectivement 13,14 est assurée au moyen de joints d'étanchéité respectivement 21 et 22 disposés dans des gorges prévues à la périphérie extérieure et à la périphérie intérieure de ces pistons.

Des joints d'étanchéité 21 sont également prévus à la périphérie extérieure des pistons mobiles 13,14 pour assurer l'étanchéité de ceux-ci par rapport au corps de vanne 2.

Enfin, un joint d'étanchéité 22 est prévu au niveau du trou 6 de l'extrémité 2a du corps de vanne pour assurer l'étanchéité de la tige de commande 9 par rapport à celui-ci.

Les premiers pistons fixe et mobile respectivement 13 et 15 et les seconds pistons fixe et mobile respectivement 14 et 16 délimitent par leurs faces en regard avec la paroi interne du corps de vanne 2 deux chambres annulaires de commande, qui seront appelées respectivement première chambre 23 et seconde chambre 24 de volume sensiblement égal.

Différents trous radiaux 25,26 sont ménagés de part en part dans chacun des premiers et seconds pistons respectivement 13,14 et la tige de commande 9 pour assurer la communication entre le trou 9a de cette tige 9 et les première et seconde chambres respectivement 23,24.

La pièce 20 est fixée à l'intérieur du corps de vanne 2 et est munie d'une collerette annulaire 20a s'étendant radialement vers l'intérieur et sur laquelle est fixée par soudage une extrémité d'un soufflet 30 métallique.

Ce soufflet 30 est, par ailleurs, fixé, également par soudage, à son autre extrémité sur la pièce 11 assurant la liaison entre l'obturateur 8 et la tige de commande 9.

Ce soufflet 30 permet d'assurer une étanchéité parfaite entre la cavité 3b de l'embase et la partie du corps de vanne 2 dans laquelle se déplace l'ensemble tige de commande/piston.

Cette disposition est particulièrement importante dans le cas où les gaz véhiculés par les conduits 4 et 5 sont des gaz dangereux, puisqu'elle permet une séparation totale de la zone de commande et de travail de la vanne.

Le fonctionnement de cette vanne est le suivant :

Au repos, la vanne est fermée, c'est-à-dire que son obturateur 8 repose contre son siège 3a comme indiqué précédemment.

Pour provoquer l'ouverture de cette vanne, le gaz de commande, en l'occurrence du gaz comprimé, sous une pression de 3,5 à 10 kg/cm², arrive par l'embout 7 à l'intérieur du trou de la tige de commande 9 puis pénètre par les trous radiaux 25 et 26 dans les chambres de commande, respectivement 23 et 24.

Il se crée ainsi à l'intérieur de ces chambres une pression agissant sur les faces en regard des pistons fixes et mobiles respectivement 15,13 ; 16,14.

Comme les pistons 15 et 16 sont en butée respectivement contre l'anneau d'arrêt 17 et contre la pièce 20, cette pression a pour effet de provoquer le déplacement vers le haut des pistons mobiles 13,14 et, par conséquent, le soulèvement de l'obturateur 8 par l'intermédiaire de la tige de commande, le ressort 28 se trouvant alors comprimé.

Ce mouvement de la tige de commande sera arrêté par la venue en butée du piston mobile 14 contre l'anneau d'arrêt 17.

Ainsi qu'on le concevra aisément, la disposition selon l'invention permet pratiquement de multiplier par deux la force d'ouverture de la vanne fournie par le gaz comprimé du fait qu'elle multiplie par deux la surface de travail de piston.

Cette disposition permet donc de réduire, pour des performances identiques, l'encombrement radial d'une telle vanne en réduisant le diamètre de piston nécessaire à son fonctionnement.

On notera que les pistons mobiles et fixes respectivement 13,15 et 14,16 réalisent deux étages de compression disposés en série. Bien entendu, un nombre d'étages de compression plus important pourrait être également prévu, afin de réduire encore plus les dimensions radiales de la vanne pour des performances identiques ou améliorer encore ces performances.

On notera que des orifices 31,32 sont prévus dans le corps de vanne 2 afin de mettre en communication avec l'extérieur les chambres 33,34 de la vanne, délimitées, d'une part, entre le premier piston 13 et le fond 2a du corps de vanne et, d'autre part, entre le premier piston fixe 15 et le second piston mobile 14.

Cette disposition permet de conserver à l'intérieur de ces chambres 33,34 une pression égale à la pression atmosphérique et donc d'éviter la création dans celle-ci d'une contrepression qui pourrait gêner le fonctionnement de la vanne.

Ces orifices 31,32 peuvent également être utilisés pour vérifier le fonctionnement de la vanne.

En effet, ils peuvent être raccordés à un tube capillaire, rempli par exemple de mercure, ou à un autre système de mesure de pression, permettant de vérifier que la vanne a bien fonctionné puisque, lors du fonctionnement de celle-ci, de l'air s'échappera par les orifices 31,32, lors de la dilatation des chambres de commande 23,24.

Ce fonctionnement de la vanne peut également être vérifié en aimantant l'un des éléments mobiles de la tige de commande 9, par exemple le piston 13 et en utilisant un détecteur magnétique, permettant de vérifier le déplacement de ce piston.

Enfin, on notera que la tige de commande présente à son extrémité ouverte une empreinte de tête de vis six-pans creux 9c, destinée à permettre l'immobilisation en rotation de l'ensemble pistons-tige de commande par l'introduction dans celle-ci d'une clé, de façon à permettre le démontage de l'obturateur 8,10 et son remplacement par un autre.

La figure 2 montre une vanne selon l'invention de type normalement ouverte, dans laquelle les éléments identiques ou similaires à ceux de la figure 1 seront désignés par les mêmes références augmentées de 100.

Dans ce cas, la vanne est également constituée d'un corps de vanne creux monobloc 102 de forme cylindrique muni à une de ses extrémités d'un embout de raccordement 107 et vissé à son autre extrémité sur une embase 103 contenant le siège 103a de l'obturateur 108.

Dans ce cas, comme dans le cas précédent, l'obturateur 108 est fixé à une tige de commande creuse 109 par l'intermédiaire d'un support 110 d'obturateur et d'une pièce de liaison 111 identiques au support 10 et à la pièce 11 de la vanne précédemment décrite.

Cette vanne comporte également un premier piston mobile 113 et un second piston mobile 114 également exactement semblables aux pistons mobiles 13 et 14 de la vanne précédente.

Par contre, elle ne présente qu'un seul piston fixe 115, le second piston fixe étant remplacé dans ce cas par la paroi de fond 102b du corps de vanne, et la cavité de commande 124 est donc formée entre le second piston mobile 114 de cette paroi 102 du corps de vanne.

Le second piston fixe 115 est indépendant du prolongement axial 113a du piston mobile 113 de la paroi du corps de vanne 102 et est maintenu fixe par un anneau d'arrêt 117 engagé par déformation élastique dans une rainure annulaire de la paroi du corps de vanne 102 et par une butée 113b du piston mobile 113.

De même que précédemment les orifices radiaux 125,126 mettent en communication l'intérieur de la tige creuse 109 avec les chambres de commande respectivement 123,124, et différents joints d'étanchéité 121,122, assurent l'étanchéité de l'ensemble.

Dans ce cas, comme il s'agit d'une vanne normalement ouverte, le ressort de rappel 128 est disposé entre la pièce 120 de support de soufflet 130 et le premier piston 123, et tend donc à soulever l'obturateur 108 de son siège en position de repos.

Le principe de fonctionnement de cette vanne est exactement le même que celui de la vanne expliqué précédemment.

Le gaz de commande arrive dans les cavités 124,123 par la tige creuse 109 et les trous radiaux 125,126 et provoque par son action sur les pistons mobiles 113,114 le déplacement de l'obturateur 108 vers le bas, réalisant ainsi la fermeture de la vanne.

On notera que les éléments constituant cette seconde vanne sont exactement les mêmes que ceux constituant la première vanne mis à part le support de vanne 102 qui a une forme légèrement différente et dont une paroi fait office de second piston fixe.

Cette disposition est particulièrement intéressante car elle permet de réduire les coûts de fabrication pour de telles vannes du fait de l'interchangeabilité des pièces utilisées.

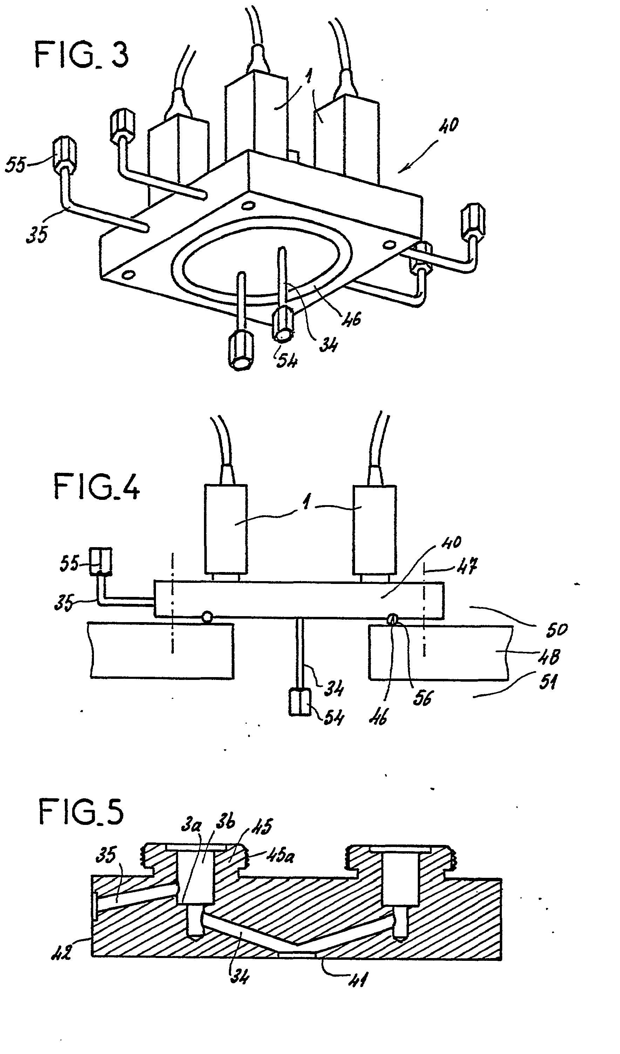

Les figures 3,4 et 5 montrent un bloc de distribution 40 permettant de grouper plusieurs vannes selon l'invention.

Ainsi que le montre notamment la figure 5 qui est une vue en soupe d'un tel bloc, les cavités et sièges 3a de l'embase de chaque vanne sont réalisés directement dans le bloc de distribution, et chacun des conduits d'arrivée 34 et de sortie 35 des gaz d'utilisation est formé par un seul perçage oblique réalisé depuis une face de ce bloc de distribution, et débouchant directement au niveau du siège 3a de l'obturateur.

Ainsi dans le cas représenté, chaque conduit d'arrivée de gaz 34 est percé depuis la face inférieure 41 du bloc de distribution par un perçage faisant un angle d'une vingtaine de degrés par rapport à cette face 41. De même, chaque conduit de sortie 35 est constitué par un perçage ménagé à partir d'une face latérale 42 du bloc de distribution 40 et faisant un angle d'environ une dizaine de degrés par rapport à la normale à cette face.

Dans le cas présent, deux (ou plusieurs) vannes 1 disposent d'une arrivée 34 commune dans le bloc de distribution 40 mais ont chacune une sortie indépendante.

Il va de soi que l'inverse pourrait être réalisé les vannes disposant de conduits d'arrivée indépendants et de conduits de sortie communs.

On notera également que le bloc de distribution 40 présente à sa face supérieure des saillies cylindriques 45 dans lesquelles débouchent les cavités 3b des sièges d'obturateurs et qui sont munies d'un filetage 45a pour le vissage sur chacune de celle-ci d'une vanne associée.

Ainsi que le montre notamment la figure 3, les conduits d'arrivée et de sortie 34,35 sont destinés à être raccordés à des embouts de raccordement respectivement 54,55 destinés à amener les gaz ou à les évacuer dans les appareils utilisateurs.

Ces embouts 54,55 sont de façon connue en soi soudés à l'extrémité des conduits 34,35, afin d'assurer une liaison avec une bonne étanchéité.

Le bloc distributeur est également utilisé pour assurer une liaison parfaitement étanche entre deux caissons 50,51 contenant l'un, 50, les appareils utilisateurs de gaz et l'autre, 51, les récipients de stockage de ces gaz.

Dans ce cas, le bloc de distribution 40 est muni sur sa face inférieure 41 d'une gorge circulaire 46 apte à recevoir un joint d'étanchéité 56.

De cette façon, le bloc peut être fixé, au moyen de vis 47 sur la paroi 48 séparant les deux caissons 50,51, l'étanchéité entre ces deux caissons étant assurée par le joint 56 serré entre la face inférieure du bloc distributeur 40 et la paroi 48 de séparation.

Cette disposition est particulièrement intéressante dans le cas où les gaz devant être distribués sont nocifs, puisqu'elle permet une isolation parfait de ceux-ci par rapport aux appareils utilisateurs.

On notera également que le fait de réaliser les conduits d'arrivée 34 et de sortie 35 du bloc de distribution par des perçages obliques arrivant directement dans le siège des vannes permet de réduire au maximum les trajets des gaz à l'intérieur du bloc de distribution et donc de minimiser au maximum les volumes résiduels.

Elle permet également d'éviter la formation de cavités mortes non utilisées et donc d'éviter le dépôt de particules.

On notera que ces deux dispositions (trajet plus court et absence de cavité morte) permettent en outre un rinçage plus rapide et efficace de ces blocs de distribution, et donc d'éviter un mélange des gaz lorsque des gaz différents sont utilisés successivement.

## Revendications

1- Vanne à commande pneumatique, du type constitué par un corps de vanne creux (2,102) de forme cylindrique fixé sur une embase (3,103) comprenant un passage de fluide de travail (4,5) coopérant avec un obturateur (8,108) à l'extrémité d'une tige de commande (9,109) appartenant à un ensemble mobile à l'intérieur du corps de vanne sous l'effet d'un fluide de commande sous pression, la tige de commande (9,109) étant munie d'au moins deux pistons mobiles (13,14;113,114) qui, avec des cloisons fixes (15,16;115) ou la paroi de fond (102b) du corps de vanne, délimitent deux ou plusieurs chambres annulaires de commande (23,24; 123,124) de volume variable dans lesquelles est admis le fluide de commande, des moyens de rappel élastique étant prévus pour ramener l'ensemble mobile à sa position de repos, caractérisée en ce que le corps de vanne (2,102) est monobloc et en ce que les cloisons fixes (15,16;115) sont conçues comme des pistons fixes traversés par la tige de commande (9;109) et qui sont montés indépendants de prolongements axiaux (13a,14a;113a) des pistons mobiles (13,14;113,114) et de la paroi du corps de vanne (2:102), l'un au moins des pistons fixes (15;115) étant maintenu fixe en position de repos par un anneau d'arrêt (17;117) engagé par déformation élastique dans une rainure annulaire de la paroi du corps de vanne (2;102) et par une butée (13b;113b) appartenant au prolongement axial (13a;113a) du piston mobile (13;113) associé.

2- Vanne selon la revendication 1, caractérisée en ce que les chambres de travail ont un volume sensiblement égal au repos et en ce que chacune des chambres de travail (23,24;123,124) est alimentée en gaz comprimé par un trou central (9a,109a) de la tige de commande et des trous radiaux (25,26;125,126) traversant chaque piston mobile (13,14;113,114) et la tige de commande (9,109).

3- Vanne selon l'une quelconque des revendications 1 et 2, caractérisée en ce que des orifices (31,32;131,132) sont ménagés dans la paroi du corps de vanne au niveau des chambres respectivement (33,34;133,134).

4- Vanne selon l'une quelconque des revendications 1 à 3, caractérisée en ce que chaque piston fixe (15,16;115) est muni d'un joint d'étanchéité intérieur respectivement (22,122) apte à assurer l'étanchéité de ce piston par rapport à la tige de commande (9,109).

5- Vanne selon l'une quelconque des revendications 1 à 4, caractérisée en ce qu'un soufflet étanche (30,130) est fixé, de façon étanche, entre, d'une part l'obturateur (8,108) et, d'autre part, le corps de vanne (2,102).

6- Vanne selon la revendication 3, caractérisée en ce qu'au moins un orifice (31,32;131,132) est relié à un dispositif de mesure de pression de façon à détecter le fonctionnement de la vanne.

7- Vanne selon l'une quelconque des revendications 1 à 5, caractérisée en ce que l'un des éléments mobiles de la tige de commande est aimanté et est apte à agir sur un détecteur magnétique de façon à vérifier le fonctionnement de la vanne.

8- Bloc de distribution pour vanne selon l'une quelconque des revendications 1 à 7, caractérisé en ce que le siège (3a) de l'obturateur de chaque vanne est réalisé directement dans ce bloc de distribution (40) et en ce que les conduits d'arrivée (34) et de sortie (35) du gaz d'utilisation sont constitués par des perçages obliques réalisés depuis une face latérale (42) ou la face inférieure (41) du bloc de distribution et débouchant directement dans chacun des sièges d'obturateur.

9- Bloc de distribution selon la revendication 8, caractérisé en ce que chaque conduit d'arrivée de gaz (34) forme un angle d'environ 20° avec la face inférieure (41) du bloc.

10- Bloc de distribution selon l'une des revendications 8 ou 9, caractérisé en ce que chaque conduit de sortie de gaz (35) forme un angle d'environ 10° par rapport à la normale d'une face latérale (42).

11- Bloc de distribution selon l'une des revendications 8 à 10, caractérisé en ce qu'il est muni sur sa face inférieure (41) d'une gorge circulaire (46) destinée à recevoir un joint d'étanchéité (51) apte à assurer l'étanchéité entre cette face (41) du bloc et la paroi de séparation (48) de deux caissons (50,51).

## Claims

1. A pneumatic control valve of the type consisting of a hollow valve body (2, 102) of cylindrical shape fixed to a base (3, 103) comprising a passage for the working fluid (4, 5) co-operating with a closing device (8, 108) at the end of a control rod (9, 109) forming part of an assembly movable within the valve body by the action of a control fluid under pressure, the control rod (9, 109) being provided with at least two movable pistons (13, 14; 113, 114) that, with fixed partitions (15, 16; 115) or the base wall (102b) of the valve body delimit two or more annular control chambers (23, 24; 123, 124) of variable volume into which the control fluid is admitted, elastic return means being provided to bring the movable assembly back to its rest position, characterized in that the valve body (2, 102) is a monobloc and that the fixed partitions (15, 16; 115) are designed as fixed pistons through which the control rod (9; 109) passes and are mounted independently of axial extensions (13a, 14a; 113a) of the movable pistons (13, 14; 113, 114) and of the wall of the valve body (2; 102), one at least of the fixed pistons (15; 115) being maintained fixed in the rest position by an arresting ring (17; 117) fitted by elastic deformation into an annular groove in the wall of the valve body (2; 102) and by an abutment (13b; 113b) that forms part of the axial extension (13a; 113a) of the associated movable piston (13; 113).

2. A valve according to Claim 1, characterized in that the working chambers have a volume at rest that is approximately equal and in that each of the working chambers (23, 24; 123, 124) is fed with compressed gas by a central hole (9a, 109a) of the control rod and by radial holes (25, 26; 125, 126) passing through each movable piston (13, 14; 113, 114) and the control rod (9, 109).

3. A valve according to either of Claims 1 and 2, characterized in that orifices (31, 32; 131, 132) are provided in the wall of the valve body at the positions of chambers (33, 34; 133, 134) respectively.

4. A valve according to any of Claims 1 to 3, characterized in that each fixed piston (15, 16; 115) is provided with an internal pressure-tightness joint (22, 122) respectively, suitable to ensure pressure-tightness of that piston relatively to the control rod (9, 109).

5. A valve according to any of Claims 1 to 4, characterized in that a pressure-tight bellows (30, 130) is fitted in pressure-tight manner between the closing device (8, 108) on one hand and the valve body (2, 102) on the other hand.

6. A valve according to Claim 3, characterized in that at least one orifice (31, 32; 131, 132) is connected to a pressure-measurement device in such a way as to detect the operation of the valve.

7. A valve according to any of Claims 1 to 5, characterized in that one of the movable units of the control rod is magnetised and is capable of acting on a magnetic detector in such a way as to verify the operation of the valve.

8. A distribution block for a valve according to any of Claims 1 to 7, characterized in that the seating (3a) of the closing device of each valve is directly produced in this distribution block (40) and in that the passages for inflow (34) and outflow (35) of the gas used are formed by oblique drilled holes produced from a lateral face (42) or the lower face (41) of the distribution block and open out directly in each of the closing device seatings.

9. A distribution block according to Claim 8, characterized in that each gas inflow passage (34) forms an angle of about 20° relatively to the lower face (41) of the block.

10. A distribution block according to one of Claims 8 or 9, characterized in that each gas outflow passage (35) forms an angle of about 10° relatively to the normal to a lateral face (42).

11. A distribution block according to one of Claims 8 to 10, characterized in that it is provided on its lower face (41) with a circular groove (46) suitable to receive a pressure-tightness joint (51) capable of ensuring pressure-tightness between that face (41) of the block and the separation wall (48) between two caissons (50, 51).

## Patentansprüche

1. Pneumatisch betätigtes Ventil, umfassend einen zylindrischen, hohlen Ventilkörper (2, 102), der auf einem Sockel (3, 103) befestigt ist, welcher einen Arbeitsfluid-Durchgang (4, 5) umfaßt, der mit einem Verschlußkörper (8, 108) an dem Ende einer Steuerstange (9, 109) zusammenwirkt, die zu einer im Inneren des Ventilkörpers unter der Wirkung eines unter Druck stehenden Steuerfluids bewegbaren Anordnung gehört, wobei die Steuerstange (9, 109) mit wenigstens zwei beweglichen Kolben (13, 14; 113, 114) versehen ist, die zusammen mit unbeweglichen Zwischenwänden (15, 16; 115) oder der Bodenwand (102b) des Ventilkörpers zwei oder mehrere ringförmige Steuerkammern (23, 24; 123, 124) mit variablen Volumen begrenzen, in welche das Steuerfluid geleitet wird, und wobei eine elastische Rückhohleinrichtung vorgesehen ist, um die bewegliche Anordnung in ihre Ruhelage zurückzuführen, dadurch gekennzeichnet, daß der Ventilkörper (2, 102) einteilig ausgeführt ist und daß die unbeweglichen Zwischenwände (15, 16; 115) wie feststehende Kolben konstruiert sind, die von der Steuerstange (9, 109) durchsetzt werden und die unabhängig von axialen Fortsätzen (13a, 14a; 113a) der beweglichen Kolben (13, 14; 113, 114) sowie der Wand des Ventilkörpers (2, 102) angeordnet sind, wobei wenigstens einer der feststehenden Kolben (15, 115) in seiner Ruhelage durch einen Haltering (17, 117), der durch elastische Verformung in eine ringförmige Nut in der Wand des Ventilkörpers (2, 102) eingesetzt ist, und durch einen Anschlag (13b, 113b) festgehalten wird, welcher zu einem axialen Fortsatz (13; 113a) eines beweglichen, mit ihm verbundenen Kolben (13; 113) gehört.

2. Ventil nach Anspruch 1, dadurch gekennzeichnet, daß die Arbeitskammern in der Ruhestellung ein im wesentlichen gleiches Volumen besitzen und daß jede der Arbeitskammern (23, 24; 123, 124) durch eine zentrale Durchbrechung (9a, 109a) der Steuerstange und durch radiale Durchbrechungen (25, 26; 125, 126), die jeden beweglichen Kolben (13, 14; 113, 114) und den Steuerstange (9, 109) durchsetzen, mit komprimierten Gas beaufschlagt werden.

3. Ventil nach einem der Ansprüche 1 und 2, dadurch gekennzeichnet, daß Öffnungen (31, 32; 131, 132) in der Wand des Ventilkörpers in Höhe der jeweiligen Kammer (33, 34; 133, 134) angeordnet sind.

4. Ventil nach einem der Ansprüche 1–3, dadurch gekennzeichnet, daß jeder feststehende Kolben (15, 16; 115) mit jeweils einem inneren Dichtungsmittel (22, 122) versehen ist, welches die Dichtigkeit dieser Kolben in bezug auf die Steuerstange (9, 109) gewährleistet.

5. Ventil nach einem der Ansprüche 1–4, dadurch gekennzeichnet, daß ein undurchlässiger Balg (30, 130) in abdichtender Weise einerseits zwischen dem Verschlußkörper (8, 108) und andererseits dem Ventilkörper (2, 102) befestigt ist.

6. Ventil nach Anspruch 3, dadurch gekennzeichnet, daß wenigstens eine Öffnung (31, 32; 131, 132) mit einer Druckmeßeinrichtung zur Druckmessung verbunden ist, um festzustellen, ob das Ventil arbeitet.

7. Ventil nach einem der Ansprüche 1–5, dadurch gekennzeichnet, daß eines der beweglichen Elemente der Steuerstange magnetisch ist und derart auf einen magnetischen Detektor einwirkt, daß das Funktionieren des Ventils überprüft wird.

8. Verteilerblock für Ventile gemäß einem der Ansprüche 1–7, dadurch gekennzeichnet, daß der Sitz (3a) des Verschlußkörpers eines jeden Ventils sich direkt in diesem Verteilerblock (40) befindet und daß die Zuführleitungen (34) und Abführleitungen (35) für das verwendete Gas durch schräge Bohrungen gebildet sind, welche von einer Seitenfläche (42) oder einer unteren Flächen (41) des Verteilerblocks ausgehen und direkt an dem jeweiligen Sitz des Verschlußkörpers münden.

9. Verteilerblock nach Anspruch 8, dadurch gekennzeichnet, daß jede Gaszuführleitung (34) einen Winkel von ungefähr 20° mit der unteren Fläche (41) des Blocks bildet.

10. Verteilerblock nach einem der Ansprüche 8 oder 9, dadurch gekennzeichnet, daß jede Gasabführleitung einen Winkel von ungefähr 10° in bezug auf die Senkrechte zu einer Seitenfläche (42) bildet.

11. Verteilerblock nach wenigstens einem der Ansprüche 8–10, dadurch gekennzeichnet, daß er auf seiner unteren Fläche (41) mit einer kreisförmigen Vertiefung (46) versehen ist, die dazu bestimmt ist, ein Dichtungselement (51) aufzunehmen, das geeignet ist, die Dichtigkeit zwischen dieser Fläche (41) des Verteilerblocks und der Trennwand (48) zweier Behälter (50, 51) zu gewährleisten.

# FIG_1

# FIG_2

FIG. 3

FIG.4

FIG.5